# EUROPEAN PATENT APPLICATION

(11) **EP 4 560 795 A1**
(43) Date of publication of application: **28.05.2025**
(21) Application number: 24214881.5
(22) Date of filing: 22.11.2024
(51) Int. Cl.: H01M 50/105, H01M 50/211, H01M 50/242

(54) **BATTERY MODULE, BATTERY PACK, AND ELECTRIC DEVICE**

(30) Priority: 24.11.2023 CN 202311587462
(71) Applicant: Xiamen Ampack Technology Limited, Xiamen City, Fujian Province, 361000 (CN)
(72) Inventor: NONG, Wenbin, 361000 Xiamen City, Fujian Province (CN); LI, Kunlong, 361000 Xiamen City, Fujian Province (CN); WANG, Pengfei, 361000 Xiamen City, Fujian Province (CN); LI, Mei, 361000 Xiamen City, Fujian Province (CN)
(74) Representative: Icosa

(57) **Abstract**

A battery module (20) includes a cell assembly (22), an elastic member (224), and a buffer (225), the cell assembly (22) includes a plurality of cell units (221) stacked along a first direction (X), the cell units (221) includes a cell (2211) and a first bracket. The cell (2211) includes a cell housing (22111), an electrode assembly (22112), and electrode terminals (22113), the cell housing (22111) includes a main body (22111a) and a first sealing portion (22111b), the main body (22111a) is provided with a first end surface (2211a), the first sealing portion (22111b) is connected to the first end surface (2211a). The first bracket (2212) includes a first coverage portion (22121), the first coverage portion (22121) covers at least a part of the first end surface (2211a). Along the first direction (X), the buffer (225) is provided between the elastic member (224) and the cell assembly (22). The buffer (225) includes a first section (2251), along a second direction (Y), the first section (2251) extends beyond the first end surface (2211a) close to the buffer (225), where the first direction (X) is perpendicular to the second direction (Y).

## Description

### TECHNICAL FIELD

This application relates to the field of battery technologies, and in particular, to a battery module, a battery pack, and an electric device.

### BACKGROUND

Batteries are widely used in portable electronic devices, electric vehicles, electric tools, drones, energy storage devices, and other fields. As the application environments and conditions become more complex, higher requirements are imposed on the reliability of batteries.

### SUMMARY

Some embodiments of this application provide a battery module, a battery pack, and an electric device, so as to improve the reliability of batteries.

According to a first aspect, the battery module includes a cell assembly, an elastic member, and a buffer, where the cell assembly includes a plurality of cell units stacked along a first direction, and each cell unit includes a cell and a first bracket. The cell includes a cell housing, an electrode assembly, and electrode terminals, where the cell housing includes a main body and a first sealing portion, the cell housing includes a main body and a first sealing portion, and the electrode terminals extend out of the cell housing from the first sealing portion. The main body is provided with a first end surface, and the first sealing portion is connected to the first end surface. The first bracket includes a first coverage portion, and the first coverage portion covers at least a part of the first end surface. The elastic member and the cell assembly are arranged along the first direction. Along the first direction, the buffer is provided between the elastic member and the cell assembly. The buffer includes a first section, and along a second direction, the first section extends beyond the first end surface close to the buffer, where the first direction is perpendicular to the second direction.

In this technical solution, the buffer includes the first section extending beyond the first end surface close to the buffer, and along the first direction, at least a part of the first section is located between the elastic member and the first coverage portion closest to the elastic member. When the cell swells, the first coverage portion closest to the elastic member moves towards the elastic member, and then the first section of the buffer abuts against the elastic member, restraining the first coverage portion from moving closer to the elastic member. This helps restrict the swelling of the first sealing portion along the first direction, and reduces the failure risk of the first sealing portion, thereby improving the reliability of the battery module.

In one or more of the foregoing optional embodiments, along a second direction, the first section extends beyond the first coverage portion close to the buffer.

In this technical solution, along the second direction, the first section extends beyond the first coverage portion close to the buffer, so that the first section can adapt to greater deformation of the first bracket.

In one or more of the foregoing optional embodiments, the main body extends beyond the first coverage portion in the first direction.

In this technical solution, when viewed along the second direction, the main body extends beyond the first coverage portion in the first direction, so that two adjacent cell units are provided with a large space at a corresponding position of the first sealing portion. This is conducive to heat dissipation and swelling of the cell during cycling.

In one or more of the foregoing optional embodiments, the main bodies of adjacent cells are in contact.

In this technical solution, the main bodies of adjacent cells are in contact. When a cell swells, the adjacent main bodies abut against the cell, so that cells can pressurize each other.

In one or more of the foregoing optional embodiments, the elastic member includes a base portion, a connecting portion, and at least one buffer portion, where the base portion and the connecting portion are spaced apart along the first direction, the base portion is connected to the buffer, and the base portion extends beyond the first section along the second direction.

In this technical solution, the base portion extends beyond the first section along the second direction, so that the base portion can apply a counteracting force to the first section on a side of the first section, the side of the first section being a side oriented away from the cell assembly, limiting the position of the buffer.

In one or more of the foregoing optional embodiments, the buffer portion includes a first bending unit, and the first bending unit includes a first bending portion and a second bending portion that are connected, where the first bending portion and the second bending portion are arranged at an included angle.

In this technical solution, the first bending portion and the second bending portion of the buffer portion are connected and arranged at an included angle, so that the buffer portion can deform to absorb the acting force produced by a swelling cell.

In one or more of the foregoing optional embodiments, a part of the first sealing portion is spaced apart from the first coverage portion, and a clearance is provided between the first sealing portion and the base portion.

In this technical solution, a clearance is provided between the first sealing portion and the base portion, which facilitates heat dissipation and provides space for swelling of the cell.

In one or more of the foregoing optional embodiments, the buffer portion is configured to provide space for swelling of the cell.

In this technical solution, the buffer portion is configured to provide space for swelling of the cell. When the cell swells, the base portion and the connecting portion squeeze the buffer portion to reduce the distance between the base portion and the connecting portion, so as to provide space for swelling of the cell.

In one or more of the foregoing optional embodiments, the battery module further includes a housing, and the connecting portion is fixed to the housing, where the cell assembly, the elastic member, and the buffer are all accommodated in the housing.

In this technical solution, the cell assembly, the elastic member, and the buffer are accommodated in the housing, making the structure of the battery module more compact. The connecting portion is fixed to the housing, which can improve the stability of the elastic member in the housing and reduce the risk of jumping.

In one or more of the foregoing optional embodiments, the buffer includes a second section, the first section extends from the second section, and along the first direction, a projection of the second section and a projection of the main body overlap.

In this technical solution, along the first direction, the projection of the second section and the projection of the main body overlap. When a cell swells, the main body and the elastic member jointly squeeze the second section to make it deform, so as to provide space for swelling of the cell.

In one or more of the foregoing optional embodiments, the first coverage portion covers at least a part of the first sealing portion.

In this technical solution, the first coverage portion covers at least a part of the first sealing portion. This can restrain the first sealing portion and reduce the risk of sealing failure of the first sealing portion due to air pressure inside the cell.

In one or more of the foregoing optional embodiments, the first bracket is integrally formed on the cell.

In this technical solution, the first bracket is integrally formed on the cell. This facilitates the connection between the first bracket and the cell, increases the structural strength of the first bracket, and ensures a stable connection between the cell and the first bracket.

In one or more of the foregoing optional embodiments, the first bracket is integrally injection-molded on the cell.

In this technical solution, the first bracket is integrally injection-molded on the cell. This facilitates the connection between the first bracket and the cell, increases the structural strength of the first bracket, and ensures a stable connection between the cell and the first bracket.

In one or more of the foregoing optional embodiments, the battery module further includes a housing, and the cell assembly, the elastic member, and the buffer are all accommodated in the housing. The housing is provided with a restraint member, and along the first direction, the elastic member is located between the buffer and the restraint member. The elastic member includes a base portion, a connecting portion, and at least one buffer portion, where the base portion and the connecting portion are spaced apart along the first direction and abut against the buffer and the restraint member respectively, and the buffer portion connects the base portion and the connecting portion.

In this technical solution, the restraint member is provided on a side of the elastic member, the side of the elastic member being a side oriented away from the buffer. This can reduce the risk that the elastic member, the buffer, and the cell assembly are detached from each other, and reduce the risk that the elastic member, the cell assembly, and the buffer are detached from the housing. In this case, the housing, the cell assembly, the elastic member, and the buffer can be integrally formed into a compact structure. The base portion and the connecting portion abut against the buffer and the restraint member respectively, so that the buffer and the restraint member can interact with the elastic member. In this way, the buffer portion can adapt to the change of the distance between the base portion and the connecting portion, so as to provide space for swelling of the cell.

In one or more of the foregoing optional embodiments, both the buffer portion and the connecting portion are provided in plurality, and each connecting portion is connected to the base portion through one buffer portion.

In this technical solution, the buffer portion and the connecting portion may be provided in plurality, so as to better absorb the acting force produced by swelling of the cell.

In one or more of the foregoing optional embodiments, two buffer portions and two connecting portions are provided. The two buffer portions are respectively connected to two edges of the base portion in a third direction, where the first direction, the second direction, and the third direction are perpendicular to each other.

In this technical solution, two buffer portions and two connecting portions are provided, and the two buffer portions are spaced apart along the first direction, so as to utilize the assembly space properly.

In one or more of the foregoing optional embodiments, an opening is provided at one end of the housing along the first direction, and the restraint member is provided at the end of the housing having the opening.

In this technical solution, the restraint member is provided at the end of the housing having the opening. In this way, the cell assembly, the buffer, and the elastic member can be confined in the housing, and then the housing, the cell assembly, the buffer, and the elastic member can be formed in to an integrated structure. This ensures a stable relative positional relationship among the housing, the cell assembly, the buffer, and the elastic member, thereby improving the structural stability of the battery module. The box cover can be removed without affecting the relative positional relationship among the cell assembly, the buffer, and the elastic member, so that the box cover can be removed and mounted separately.

In one or more of the foregoing optional embodiments, the housing includes a first wall and a second wall arranged opposite to each other along the second direction, and the restraint member includes a first restraint member and a second restraint member spaced apart along the second direction, where the first restraint member and the second restraint member are connected to the first wall and the second wall respectively, and the connecting portion abuts against the first restraint member and the second restraint member.

In this technical solution, the first restraint member and the second restraint member are respectively connected to the first wall and the second wall arranged opposite to each other along the second direction. This reduces the risk that the first restraint member and the second restraint member interfere with other structures. The first restraint member and the second restraint member jointly limit the position of the elastic member, so that the elastic member can more reliably abut between the restraint member and the buffer.

In one or more of the foregoing optional embodiments, along the second direction, the connecting portion is provided with two extensions extending beyond two ends of the base portion, and the two extensions abut against the first restraint member and the second restraint member respectively.

In this technical solution, the extensions abut against the first restraint member and the second restraint member respectively. When the cell swells, the connecting portion deforms along a direction oriented away from the cell assembly, so as to adapt to swelling of the cell and provide space for the deformed cell.

In one or more of the foregoing optional embodiments, the housing includes a third wall and a fourth wall arranged opposite to each other along the third direction, where the first direction, the second direction, and the third direction are perpendicular to each other. The restraint member includes a third restraint member and a fourth restraint member spaced apart along the third direction, where the third restraint member and the fourth restraint member are connected to the third wall and the fourth wall respectively, and the connecting portion abuts against the third restraint member and the fourth restraint member.

In this technical solution, the third restraint member and the fourth restraint member are connected to the third wall and the fourth wall respectively, reducing the risk that the third restraint member and the fourth restraint member interfere with other structures. The third restraint member and the fourth restraint member jointly confine the cell assembly, the buffer, and the elastic member in the housing, reducing the risk that the cell assembly, the buffer, and the elastic member are detached from the housing. In this way, the elastic member can more stably abut between the restraint member and the buffer.

In one or more of the foregoing optional embodiments, an embodiment of this application provides a battery pack, where the battery pack includes a box cover and the battery module according to any one of the foregoing embodiments, and the box cover is connected to the battery module.

In this technical solution, the box cover is connected to the battery module. This can protect structures in the battery module and improve the sealing performance of the battery pack, thereby improving the reliability of the battery pack. The battery module according to any one of the foregoing embodiments has high reliability, and therefore the battery pack using the battery module also has high reliability.

In one or more of the foregoing optional embodiments, an embodiment of this application further provides an electric device, and the electric device includes the battery pack according to any one of the foregoing embodiments.

In this technical solution, the battery pack according to any one of the foregoing embodiments has high reliability, which helps improve the reliability of the electric device powered by such battery module and battery pack.

### BRIEF DESCRIPTION OF DRAWINGS

To explain the technical solutions in some embodiments of this application more clearly, the following briefly describes the accompanying drawings required for the embodiments. It should be understood that the accompanying drawings below illustrate only some embodiments of this application.
FIG. 1 is a schematic diagram of a battery pack according to some embodiments of this application;
FIG. 2 is an exploded view of a battery pack according to some embodiments of this application;
FIG. 3 is an exploded view of a housing according to some embodiments of this application;
FIG. 4 is a schematic structural diagram of a second wall according to some embodiments of this application;
FIG. 5 is a schematic structural diagram of a cell assembly according to some embodiments of this application;
FIG. 6 is a schematic structural diagram of a cell according to some embodiments of this application;
FIG. 7 is an exploded view of a cell according to some embodiments of this application;
FIG. 8 is a schematic structural diagram of a cell unit according to some embodiments of this application;
FIG. 9 is an enlarged view of position A1 in FIG. 8;
FIG. 10 is a schematic structural diagram of a cell unit according to some embodiments of this application from another angle of view;
FIG. 11 is an enlarged view of position A2 in FIG. 10;
FIG. 12 is a schematic diagram of the cooperation among a cell assembly, an elastic member, and a buffer according to some embodiments of this application;
FIG. 13 is an enlarged view of position A3 in FIG. 12;
FIG. 14 is an enlarged view of position A31 in FIG. 13;
FIG. 15 is a sectional view of a battery pack according to some embodiments of this application;
FIG. 16 is an enlarged view of position A4 in FIG. 15;
FIG. 17 is an enlarged view of position A41 in FIG. 16;
FIG. 18 is an enlarged view of position A5 in FIG. 12;
FIG. 19 is an enlarged view of position A51 in FIG. 18;
FIG. 20 is an enlarged view of position A6 in FIG. 15;
FIG. 21 is an enlarged view of position A61 in FIG. 20;
FIG. 22 is a schematic diagram of the cooperation between a a part of the housing and an elastic member;
FIG. 23 is a schematic structural diagram of a battery module according to some embodiments of this application;
Fig. 24 is a schematic structural diagram of an elastic member according to some embodiments of this application;
FIG. 25 is a schematic structural diagram of an elastic member according to some embodiments of this application from another angle of view;
FIG. 26 is a view of an elastic member according to some embodiments of this application when viewed along a first direction; and
FIG. 27 is a view of an elastic member according to some embodiments of this application when viewed along a direction opposite to a first direction.
Reference signs: 100: battery pack; 10: box cover; 10a: input terminal; 10b: output terminal; 20: battery module; 21: housing; 211: accommodating space; 212: opening; 213: first wall; 214: second wall; 215: third wall; 2151: first fixing portion; 216: fourth wall; 2161: second fixing portion; 217: fifth wall; 22: cell assembly; 221: cell unit; 2211: cell; 2211a: first end surface; 2211b: second end surface; 22111: cell housing; 22111a: main body; 22111b: first sealing portion; 22111c: second sealing portion; 22112: electrode assembly; 22113: electrode terminal; 2212: first bracket; 22121: first coverage portion; 22122b: first notch; 2213: second bracket; 22131: second coverage portion; 222: first conductor; 223: second conductor; 224: elastic member; 2241: base portion; 22411: stiffener; 2242: connecting portion; 22421: extension; 2243: buffer portion; 2243a: first bending unit; 22431: first bending portion; 22432: second bending portion; 225: buffer; 2251: first section; 2252: second section; 2253: third section; 23: restraint member; 231: first restraint member; 232: second restraint member; 233: third restraint member; 234: fourth restraint member; 24: first insulator; 30: circuit board; X: first direction; Y: second direction; Y': direction opposite the second direction; Z: third direction; and Q1: air clearance.

### DETAILED DESCRIPTION OF EMBODIMENTS

To make the objectives, technical solutions, and advantages of the embodiments of this application clearer, the following clearly and completely describes the technical solutions in some embodiments of this application with reference to the accompanying drawings in some embodiments of this application. Apparently, some described embodiments are some but not all embodiments of this application. Generally, the components of the embodiments of this application as described and illustrated in the accompanying drawings herein can be arranged and designed in a variety of configurations.

Therefore, the following detailed description of some embodiments of this application as provided in the accompanying drawings is not intended to limit the scope of this application but merely to represent selected embodiments of this application. It should be noted that, without conflict, some embodiments and features in the embodiments in this application may be combined with each other.

It should be noted that similar reference numerals and letters indicate similar items in the following drawings, and therefore once an item is defined in one drawing, it does not need to be further defined or explained in the subsequent drawings.

In the description of some embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

Currently, from a perspective of market development, application of battery modules is being more extensive. Battery modules are widely used in electric vehicles such as electric bicycles, electric motorcycles, and electric cars, electric tools, drones, energy storage devices, and other fields. With continuous extension of application fields of battery modules, market demands for the battery modules are also expanding.

Along with the development of battery technologies, many design factors should be considered, for example, performance parameters such as energy density, cycle life, discharge capacity, and charge and discharge rate. In addition, reliability of batteries is also a major factor as environmental conditions and/or internal conditions of the batteries change.

With the charge/discharge cycling of a battery, gas accumulates inside the cells of the battery and the cells swell continuously. If the swelling is not limited to a certain extent, seals on the cells are likely to be broken by the gas inside the cells, causing sealing failure of the cells and affecting the reliability of the battery.

To solve the problem of low reliability of the battery caused by increased air pressure in the cells, an embodiment of this application provides a battery module. The battery module includes a cell assembly, an elastic member, and a buffer, where the cell assembly includes a plurality of cell units stacked along a first direction, and each cell unit includes a cell and a first bracket. The cell includes a cell housing, an electrode assembly, and electrode terminals, where the cell housing includes a main body and a first sealing portion, and the electrode terminals extend out of the cell housing from the first sealing portion. The main body is provided with a first end surface, and the first sealing portion is connected to the first end surface. The first bracket includes a first coverage portion, and the first coverage portion covers at least a part of the first end surface. The elastic member and the cell assembly are arranged along the first direction. Along the first direction, the buffer is provided between the elastic member and the cell assembly. The buffer includes a first section, and along a second direction, the first section extends beyond the first end surface close to the buffer, where the first direction is perpendicular to the second direction.

The buffer includes the first section extending beyond the first end surface close to the buffer, and along the first direction, at least a part of the first section is located between the elastic member and the first coverage portion closest to the elastic member. When the cell swells, the first coverage portion closest to the elastic member moves a small distance towards the elastic member, and then the first section of the buffer abuts against the elastic member, restraining the first coverage portion from moving closer to the elastic member. This helps restrict the swelling of the first sealing portion along the first direction, and reduces the failure risk of the first sealing portion, thereby improving the reliability of the battery module.

An embodiment of this application provides an electric device using a battery pack or battery module as the power source. The electric device may be but is not limited to an electronic device, an electric tool, an electric vehicle, a drone, or an energy storage device. The electronic device may include a mobile phone, a tablet, a laptop computer, and the like. The electric tool may include an electric drill, an electric saw, and the like. The electric vehicle may include an electric car, an electric motorcycle, an electric bicycle, and the like.

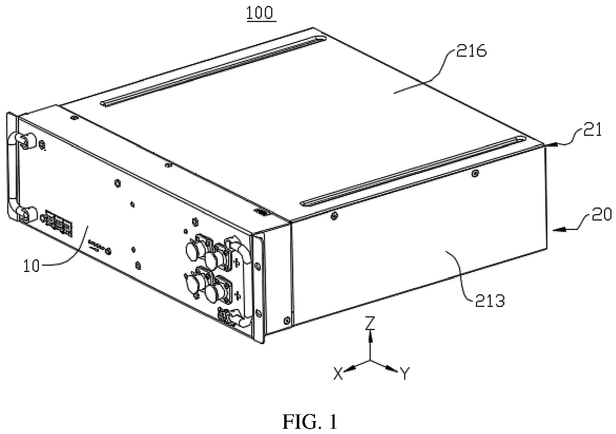

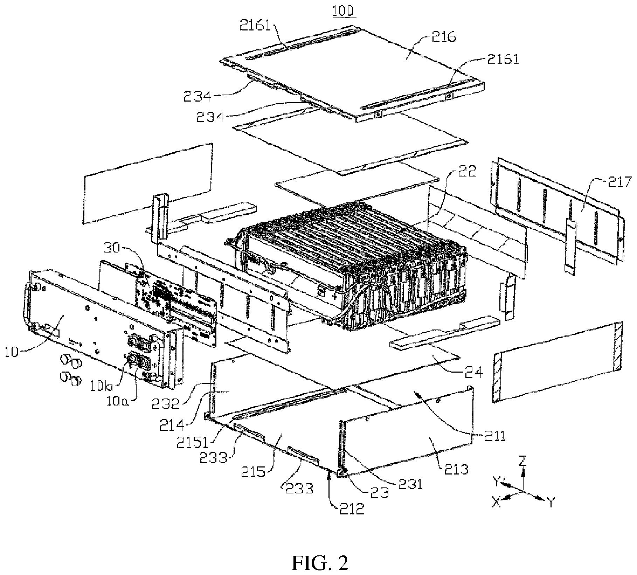

As shown in FIG. 1 and FIG. 2, a battery pack 100 includes a box cover 10 and a battery module 20. The box cover 10 is connected to the battery module 20.

Along a first direction X, the box cover 10 is connected to a side of the battery module 20, and can cover the battery module 20. The box cover 10 covers the side of the battery module 20 along the first direction X. This can protect structures in the battery module 20 and improve the sealing performance of the battery pack 100, thereby improving the reliability of the battery pack 100.

The box cover 10 is provided with an input terminal 10a and an output terminal 10b. The input terminal 10a and the output terminal 10b are electrically connected to an aggregate positive terminal and an aggregate negative terminal of the cell assembly 22 respectively. The input terminal 10a and the output terminal 10b are configured for electrical connection with an external device, so as to charge the battery pack 100 or discharge the electric energy of the battery pack 100.

In some embodiments, the battery pack 100 includes a circuit board 30, and the circuit board 30 is connected to a cell assembly 22.

In some embodiments, the circuit board 30 includes a BMS (Battery Management System, battery management system) board. The circuit board 30 may be provided with a circuit element, for example, an information collector.

The battery module 20 includes a housing 21. An accommodating space 211 is formed in the housing 21. The cell assembly 22 is accommodated in the accommodating space 211.

In some embodiments, the housing 21 may be integrally formed. An opening 212 is formed at one end of the accommodating space 211 along the first direction X, and the box cover 10 covers the opening 212. The box cover 10 covers the opening 212 of the housing 21 of the battery module 20. This can protect structures in the housing 21 and improve the sealing performance of the battery pack 100, thereby improving the reliability of the battery pack 100.

The box cover 10 is connected to the housing 21 to cover the opening 212. The box cover 10 and the housing 21 may be detachably connected, for example, connected using bolts or buckles. In this way, the box cover 10 can be removed easily, and the housing 21 and the box cover 10 can be maintained separately. The box cover 10 and the housing 21 may be permanently connected, for example, connected by means of welding or bonding, so as to improve the stability of connection between the box cover 10 and the housing 21 as well as the performance of sealing between the housing 21 and the box cover 10.

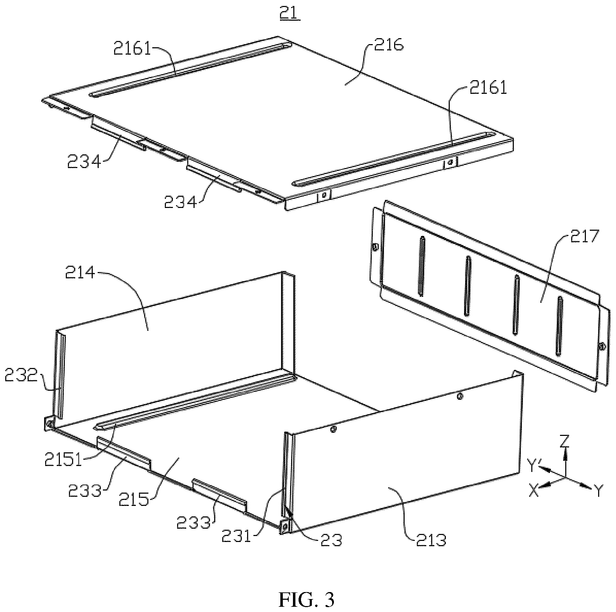

As shown in FIG. 2 and FIG. 3, the housing 21 includes a plurality of walls, and the plurality of walls jointly enclose the accommodating space 211. The plurality of walls may be integrally molded to form the housing 21, and the housing 21 may be integrally formed using a method such as casting, injection molding, and stamping.

Alternatively, a part of the walls may be integrally molded and connected to the other a part of the walls to form a whole, so as to form the housing 21 with the accommodating space 211.

In some other embodiments, the walls of the housing 21 may be separately arranged and then connected to form the housing 21. The manner of connection between walls may be but is not limited to welding connection and bonding connection.

As shown in FIG. 2 and FIG. 3, the housing 21 includes a first wall 213, a second wall 214, a third wall 215, a fourth wall 216, and a fifth wall 217.

The first wall 213 and the second wall 214 are arranged opposite to each other along the second direction Y, and the third wall 215 and the fourth wall 216 are arranged opposite to each other along the third direction Z.

The opening 212 and the fifth wall 217 are arranged opposite to each other along the first direction X. The first direction X, the second direction Y, and the third direction Z are perpendicular to each other.

In some embodiments, the third wall 215 bears the gravity of the cell assembly 22, so as to support the cell assembly 22. The first wall 213 and the second wall 214 are connected to respectively connected to two ends of the third wall 215 along the second direction Y.

The first wall 213, the second wall 214, and the third wall 215 may be integrally formed. The fourth wall 216 is connected to an end of the first wall 213, the end of the first wall 213 being an end oriented away from the third wall 215, and the fourth wall 216 is connected to an end of the second wall 214, the end of the second wall 214 being an end oriented away from the third wall 215.

The fourth wall 216 and the first wall 213 may be detachably connected, which facilitates the repair and replacement of the fourth wall 216 and the first wall 213. The detachable connection may be a bolt connection, a buckling connection, or the like.

The second wall 214 and the fourth wall 216 may be permanently connected, which facilitates the formation of the second wall 214 and the fourth wall 216. The permanent connection may be a welding connection, a bonding connection, or the like.

The fourth wall 216 and the second wall 214 may be detachably connected, which facilitates the repair and replacement of the second wall 214 and the fourth wall 216. The detachable connection may be a bolt connection, a buckling connection, or the like.

The first wall 213, the second wall 214, the third wall 215, and the fourth wall 216 are all connected to the fifth wall 217, and the fifth wall 217 and the opening 212 of the accommodating space 211 are arranged opposite to each other along the first direction X.

The first wall 213, the second wall 214, the third wall 215, and the fourth wall 216 may be permanently connected to the fifth wall 217, for example, connected through welding or bonding.

The first wall 213, the second wall 214, the third wall 215, and the fourth wall 216 may be detachably connected to the fifth wall 217, which facilitates the repair and replacement of various components of the housing 21. The detachable connection may be a bolt connection, a buckling connection, or the like.

In some other embodiments, the first wall 213, the second wall 214, the third wall 215, the fourth wall 216, and the fifth wall 217 may also be integrally formed, which facilitates the formation of the housing 21. In this way, the housing 21 has high structural strength.

As shown in FIG. 2 and FIG. 3, the third wall 215 is provided with two first fixing portions 2151, and the two first fixing portions 2151 are spaced apart along the second direction Y.

The first fixing portion 2151 protrudes from the inner surface of the third wall 215. When the third wall 215 supports the cell assembly 22, the two first fixing portions 2151 can restrict the movement of the cell assembly 22 along the second direction Y and an direction Y' opposite to the second direction, thereby improving the stability of the cell assembly 22 in the housing 21.

The first fixing portion 2151 may be formed by stamping the outer surface of the third wall 215. During stamping, a depression is formed on the outer surface of the third wall 215, and a protruding first fixing portion 2151 is formed on the inner surface of the third wall 215.

The inner surface of the third wall 215 refers to a surface of the third wall 215, the surface of the third wall 215 being a surface facing the cell assembly 22 along the third direction Z, and the outer surface of the third wall 215 refers to a surface of the third wall 215, the surface of the third wall 215 being a surface oriented away from the cell assembly 22 along a direction opposite to the third direction Z.

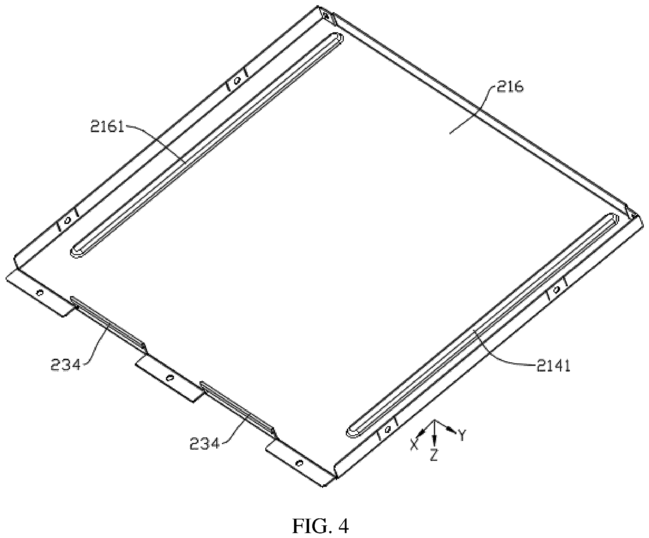

As shown in FIG. 4, the fourth wall 216 is provided with two second fixing portions 2161, and the two second fixing portions 2161 are spaced apart along the second direction Y.

The second fixing portion 2161 protrudes from the inner surface of the fourth wall 216. The two second fixing portions 2161 can restrict the movement of the cell assembly 22 along the second direction Y and along the direction Y' opposite to the second direction Y, thereby improving the stability of the cell assembly 22 in the housing 21.

The second fixing portion 2161 may be formed by stamping the outer surface of the fourth wall 216. During stamping, a depression is formed on the outer surface of the fourth wall 216, and a protruding second fixing portion 2161 is formed on the inner surface of the fourth wall 216.

The inner surface of the fourth wall 216 refers to a surface of the fourth wall 216, the surface of the fourth wall 216 being a surface facing the cell assembly 22 along the direction opposite to the third direction Z, and the outer surface of the fourth wall 216 refers to a surface of the fourth wall 216, the surface of the fourth wall 216 being a surface oriented away from the cell assembly 22 along the third direction Z.

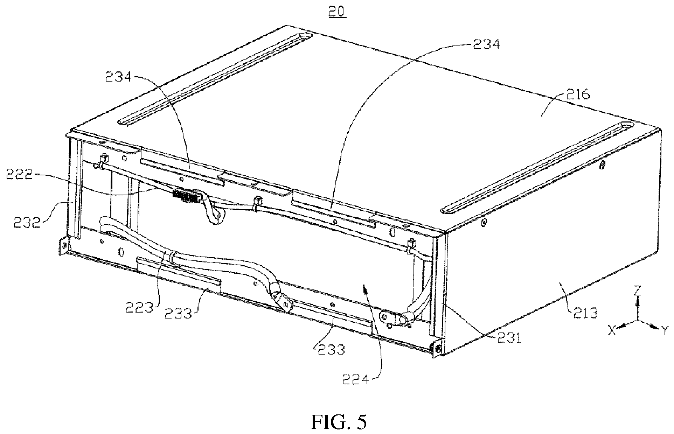

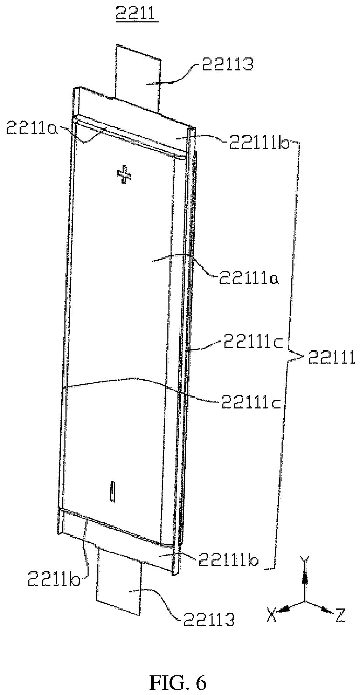

As shown in FIG. 5 and FIG. 6, the cell assembly 22 includes a plurality of cell units 221, and the plurality of cell units 221 are stacked along the first direction X. "A plurality of" means two or more. Each cell unit 221 includes a cell 2211. The cell 2211 may be a cell with a hard casing or a pouch cell. The cell 2211 includes a cell housing 22111, an electrode assembly 22112, and electrode terminals 22113. The electrode assembly 22112 is accommodated in the cell housing 22111. The cell housing 22111 may be made of aluminum-plastic film, steel-plastic film, or the like.

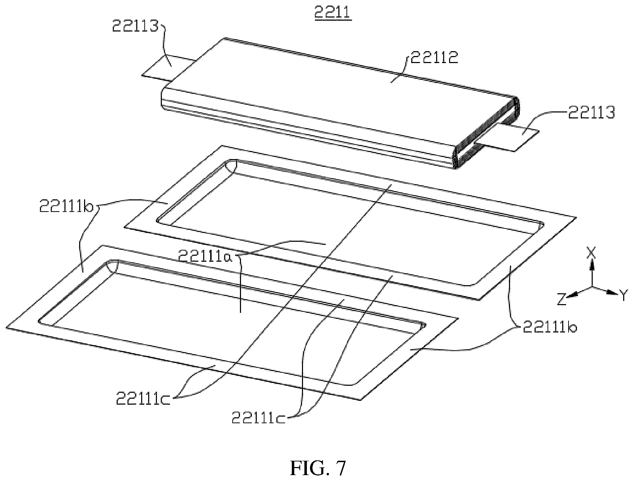

In FIG. 6 and FIG. 7, the cell 2211 is a pouch cell. As shown in FIG. 6 and FIG. 7, the cell housing 22111 includes a main body 22111a and a first sealing portion 22111b. in the second direction Y, the main body 22111a is provided with a first end surface 2211a. The first sealing portion 22111b is connected to the first end surface 2211a. along the second direction Y, the first sealing portion 22111b protrudes from the first end surface 2211a. The electrode assembly 22112 is accommodated in the main body 22111a. The electrode terminals 22113 are connected to the electrode assembly 22112 and extend out of the cell housing 22111 from the first sealing portion 22111b.

The cell 2211 includes two electrode terminals 22113. The two electrode terminals 22113 are both connected to the electrode assembly 22112, the two electrode terminals 22113 have opposite polarities.

In some embodiments, the two electrode terminals 22113 may be located one end of the cell 2211 in the second direction Y, and the two electrode terminals 22113 extend out of the cell housing 22111 from the same first sealing portion 22111b. In this way, the cell assembly 22 can be properly disposed in the housing 21, so that the internal space of the housing 21 is fully utilized and other structures can be electrically connected to the two electrode terminals 22113 conveniently.

As shown in FIG. 5 to FIG. 7, in some other embodiments, the two electrode terminals 22113 may be located at opposite ends of the cell 2211 respectively. The cell housing 22111 includes two first sealing portions 22111b. in the second direction Y, the two first sealing portions 22111b are located on two sides of the main body 22111a respectively. One first sealing portion 22111b is connected to the first end surface 2211a of the main body 22111a, and the other first sealing portion 22111b is connected to a second end surface 2211b of the main body 22111a. The first end surface 2211a and the second end surface 2211b are arranged opposite to each other along the second direction Y. The two electrode terminals 22113 may be located at opposite ends of the cell 2211 respectively, so as to reduce the risk of short circuit of the cell assembly 22.

In some embodiments, the cell housing 22111 includes two second sealing portions 22111c arranged opposite to each other along the third direction Z. Along the third direction Z, the two second sealing portions 22111c are located on two sides of the main body 22111a respectively. This not only facilitates the assembly and formation of the cell 2211, but also helps improve the sealing performance of the cell 2211.

The plurality of cells 2211 may be connected in series or in parallel. Alternatively, some cells 2211 in the plurality of cells 2211 are connected in series and the rest of cells 2211 are connected in parallel.

As shown in FIG. 5, the cell assembly 22 further includes a first conductor 222 and a second conductor 223. The first conductor 222 is electrically connected to one electrode terminal 22113 of the cell 2211 to form an aggregate positive terminal of the cell assembly 22, and the second conductor 223 is electrically connected to the other electrode terminal 22113 of the cell 2211 to form an aggregate negative terminal of the cell assembly 22. The aggregate positive terminal and the aggregate negative terminal are electrically connected to the input terminal 10a and the output terminal 10b respectively.

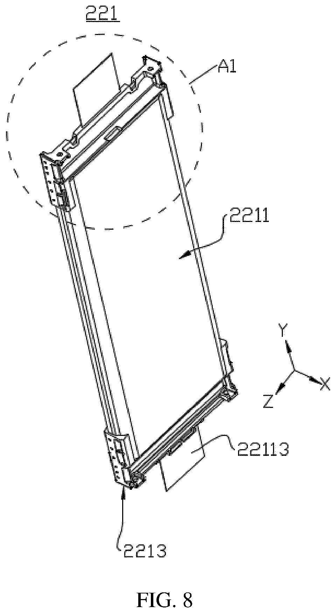

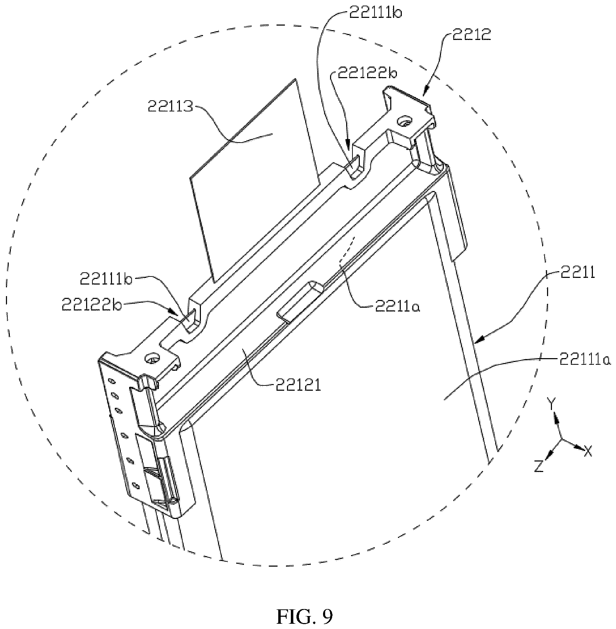

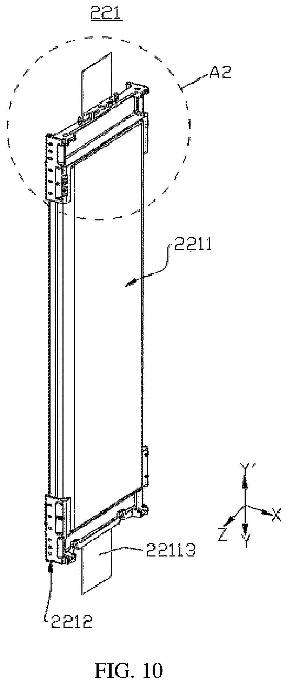

As shown in FIG. 5, FIG. 8, FIG. 9, and FIG. 10, in some embodiments, the cell unit 221 further includes a first bracket 2212. The first bracket 2212 is provided on the cell 2211.

In some embodiments, the main bodies 22111a of cells 2211 of two adjacent cell units 221 are in contact-type connection. When a cell 2211 swells, the adjacent main bodies 22111a abut against each other, so that cells 2211 can pressurize each other.

In some embodiments, the first bracket 2212 includes a first coverage portion 22121. The first coverage portion 22121 covers at least a part of the first end surface 2211a. This can mitigate the deformation of the main body 22111a, reduce the risk of bulging on the first end surface 2211a, and improve the reliability of the battery module 20. The first coverage portion 22121 may be connected to the first end surface 2211a, or may only be attached to the first end surface 2211a.

In this embodiment, the first bracket 2212 includes two first coverage portions 22121, and the two first coverage portions 22121 are located on two opposite sides of the first sealing portion 22111b along the first direction X. The two first coverage portions 22121 respectively cover the parts of the first end surface 2211a located on two sides of the first sealing portion 22111b. The two first coverage portions 22121 are located respectively on two opposite sides of the first sealing portion 22111b along the first direction X, so as to strengthen the protection of the cell 2211.

In some embodiments, a part of one first sealing portion 22111b is spaced apart from the first coverage portion 22121 connected to the first sealing portion 22111b. It should be understood that the first coverage portion 22121 covers a part of the corresponding first sealing portion 22111b, and the part of the first sealing portion 22111b not covered by the first coverage portion 22121 can expand under the internal pressure of the cell 2211.

In some embodiments, the first coverage portion 22121 covers at least a part of the first sealing portion 22111b. This can restrain the first sealing portion 22111b, reduce the risk of sealing failure of the first sealing portion 22111b due to internal air pressure of the cell 2211, and improve the sealing performance of the cell 2211.

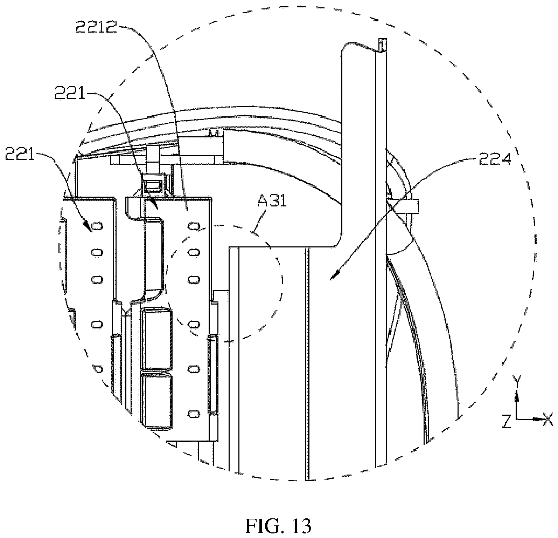

In some embodiments, in the first direction X, the main body 22111a extends beyond the first coverage portion 22121 (as shown in FIG. 13). In this case, two adjacent cell units 221 are provided with a large space at a corresponding position of the first sealing portion 22111b. This is conducive to heat dissipation and swelling of the cell 2211 during cycling.

The first bracket 2212 is further provided with a first notch 22122b, and the first notch 22122b exposes a part of an end of the first sealing portion 22111b, the end of the first sealing portion 22111b being an end oriented away from the main body 2111a . Therefore, the first notch 22122b can function as a pressure relief valve. To be specific, when the internal pressure of the cell 2211 reaches a threshold, pressure is relieved through the first notch 22122b, thereby reducing the risk of thermal runaway of the battery module 20.

There may be one or more first notches 22122b. The plurality of first notches 22122b are spaced apart along the third direction Z.

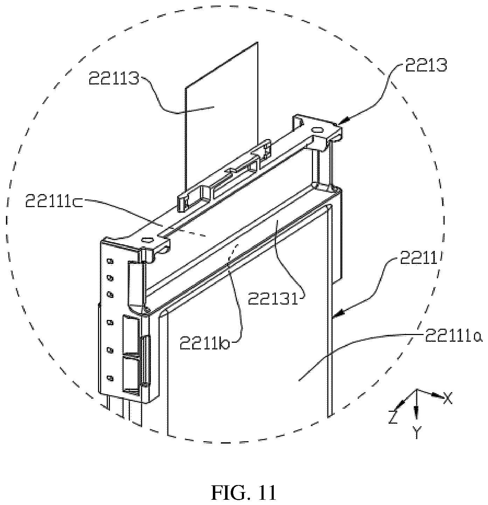

In an embodiment where the two electrode terminals 22113 are respectively located at opposite ends of the cell 2211 along the second direction Y, as shown in FIG. 11, FIG. 12, and FIG. 13, the cell unit 221 includes a second bracket 2213, and the second bracket 2213 includes a second coverage portion 22131. The second coverage portion 22131 covers at least a part of the second end surface 2211b. This can mitigate the deformation of the main body 22111a, reduce the risk of bulging on the second end surface 2211b, and improve the reliability of the battery module 20. The second coverage portion 22131 may be connected to the second end surface 2211b, or may only be attached to the second end surface 2211b.

In this embodiment, the second bracket 2213 includes two second coverage portions 22131, and the two second coverage portions 22131 are located on two opposite sides of the other first sealing portion 22111b along the first direction X. The two second coverage portions 22131 respectively cover the parts of the second end surface 2211b located on two sides of the first sealing portion 22111b.

In some embodiments, a part of the first sealing portion 22111b corresponding to the second bracket 2213 is spaced apart from the second coverage portion 22131. It should be understood that the second coverage portion 22131 covers a part of the corresponding first sealing portion 22111b, and the part of the first sealing portion 22111b not covered by the second coverage portion 22131 can expand under the internal pressure of the cell 2211.

In some embodiments, the second coverage portion 22131 covers at least a part of the first sealing portion 22111b. This can restrain the first sealing portion 22111b, and reduce the risk of sealing failure of the first sealing portion 22111b due to internal air pressure of the cell 2211.

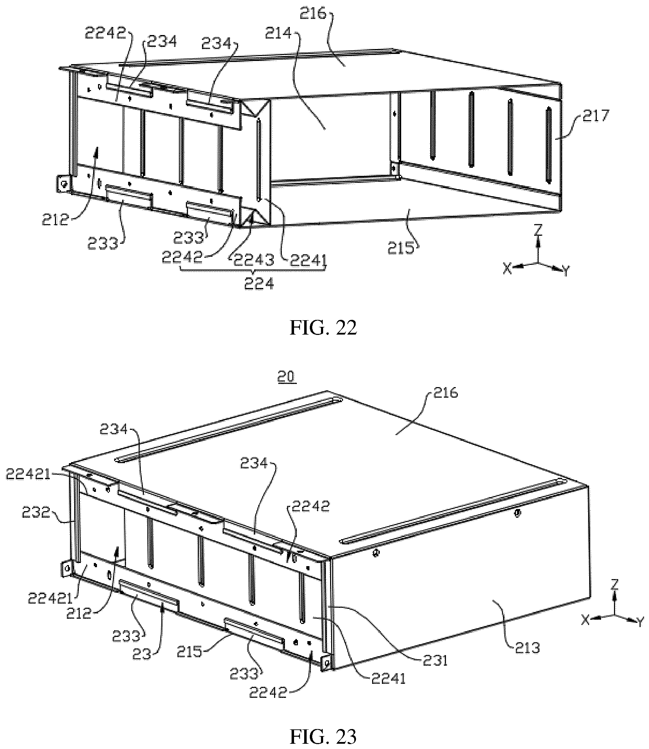

In some embodiments, when viewed along the second direction Y, the main body 22111a extends beyond the second coverage portion 22131 in the first direction X (as shown in FIG. 23). In this case, two adjacent cell units 221 are provided with a large space at a corresponding position of the in the accommodating first sealing portion 22111b. This is conducive to heat dissipation and swelling of the cell 2211 during cycling.

A distance between the second coverage portion 22131 and the elastic member 224 is greater than a distance between a surface of the main body 22111a and the elastic member 224, the second coverage portion 22131 is located on a side of the first sealing portion 22111b, the side of the first sealing portion 22111b being a side facing the elastic member 224, the surface of the main body 22111a being a surface facing the elastic member 224. A distance between the second coverage portion 22131, and the elastic member 224 is smaller than a distance between a surface of the main body 22111a and the elastic member 224, the second coverage portion 22131is located on a side of the first sealing portion 22111b, the side of the first sealing portion 22111b being a side oriented away from the elastic member 224, the surface of the main body 22111a being a surface oriented away from the elastic member 224 .

In an embodiment where the first bracket 2212 is provided with the first notch 22122b, the second bracket 2213 may not be provided with a notch that functions as a pressure relief valve. In some other embodiments, the second bracket 2213 may further be provided with a second notch (not shown in the figure), and the second notch exposes a part of an end of the first sealing portion 22111b, the end of the first sealing portion 22111b being an end oriented away from the main body 22111a. The part of the first sealing portion 22111b located at the second notch is not restrained by the second bracket 2213. Therefore, the second notch can function as a pressure relief valve. To be specific, when the internal pressure of the cell 2211 reaches a threshold, pressure is relieved through the second notch, thereby reducing the risk of thermal runaway of the battery module 20.

The first bracket 2212 and the second bracket 2213 may adopt the same or different structures. In an embodiment of this application, the first bracket 2212 and the second bracket 2213 adopt different structures.

The first bracket 2212 can be disposed on the cell 2211 in different ways, for example, the first bracket 2212 is bonded to the cell 2211, and the first bracket 2212 is welded to the cell 2211.

In some embodiments, the first bracket 2212 is integrally formed on the cell 2211. This facilitates the connection between the first bracket 2212 and the cell 2211, increases the structural strength of the first bracket 2212, and ensures a stable connection between the cell 2211 and the first bracket 2212. The integrated forming method includes but is not limited to casting and injection molding.

In some embodiments, after an insulating material is poured around the cell 2211 by using the casting process, the insulating material solidifies to form the first bracket 2212, and the first bracket 2212 and the cell 2211 are bonded. For example, the cell 2211 is placed into a mold, the insulating material is poured into the mold, the insulating material solidifies to form the first bracket 2212 and is bonded with the cell 2211, and then the first bracket 2212 and the cell 2211 are taken out of the mold.

In some embodiments, the insulating material includes but is not limited to a potting compound and polystyrene foam.

In some embodiments, the injection molding process refers to that: the cell 2211 is placed into a mold, the injection molding device heats and melts the insulating material, the melted insulating material flows into the mold, the insulating material solidifies to form the first bracket 2212 and is bonded with the cell 2211, and then the first bracket 2212 and the cell 2211 are taken out of the mold. Optionally, the insulating material includes polyamide.

In some embodiments, the first bracket 2212 is an insulating bracket, which can reduce the risk of short circuit between the first bracket 2212 and the cell 2211.

In an embodiment where the cell unit 221 includes a second bracket 2213, the second bracket 2213 may be integrally formed on the cell 2211. This facilitates the connection between the second bracket 2213 and the cell 2211, increases the structural strength of the second bracket 2213, and ensures a stable connection between the cell 2211 and the second bracket 2213. The integrated forming method includes but is not limited to casting and injection molding.

In some embodiments, after an insulating material is poured around the cell 2211 by using the casting process, the insulating material solidifies to form the second bracket 2213, and the second bracket 2213 and the cell 2211 are bonded. For example, the cell 2211 is placed into a mold, the insulating material is poured into the mold, the insulating material solidifies to form the second bracket 2213 and is bonded with the cell 2211, and then the second bracket 2213 and the cell 2211 are taken out of the mold.

In some embodiments, the insulating material includes but is not limited to a potting compound and polystyrene foam.

In some embodiments, the injection molding process refers to that: the cell 2211 is placed into a mold, the injection molding device heats and melts the insulating material, the melted insulating material flows into the mold, the insulating material solidifies to form the second bracket 2213 and is bonded with the cell 2211, and then the second bracket 2213 and the cell 2211 are taken out of the mold. Optionally, the insulating material includes polyamide.

In some embodiments, the second bracket 2213 is an insulating bracket, which can reduce the risk of short circuit between the second bracket 2213 and the cell 2211.

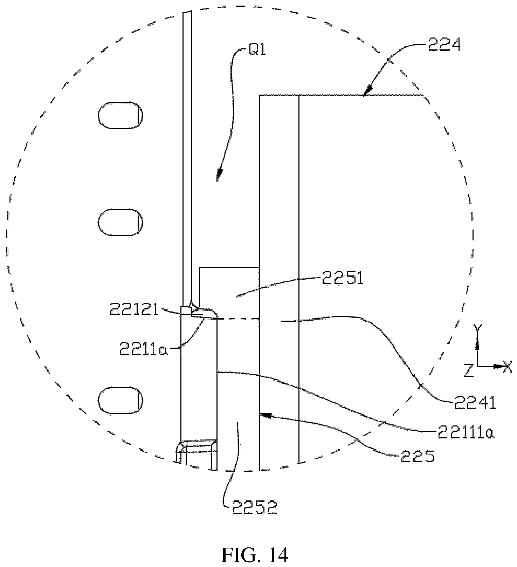

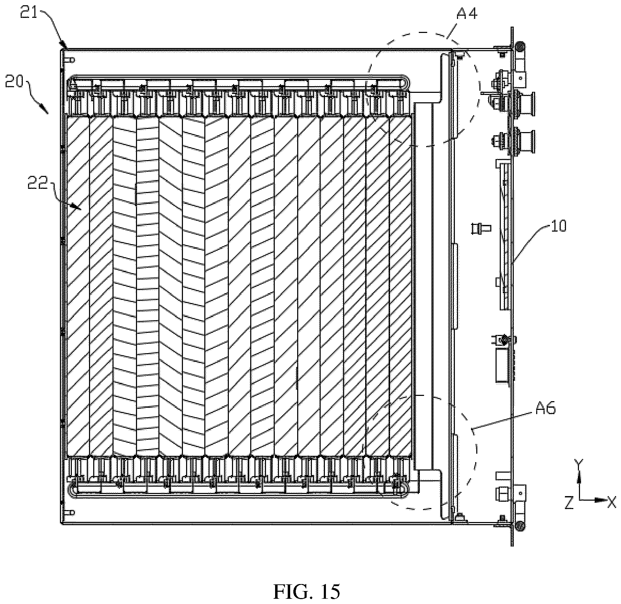

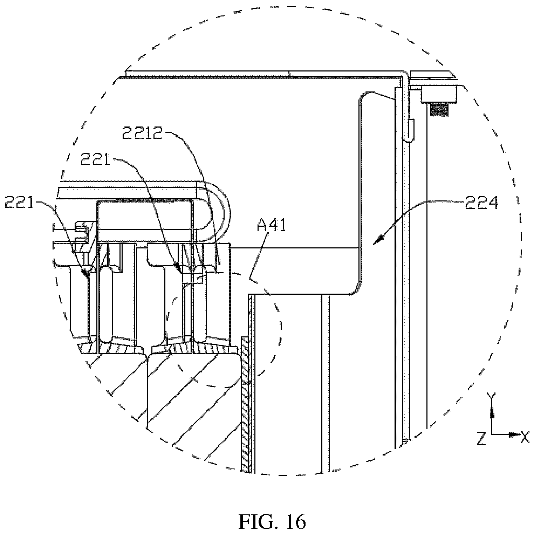

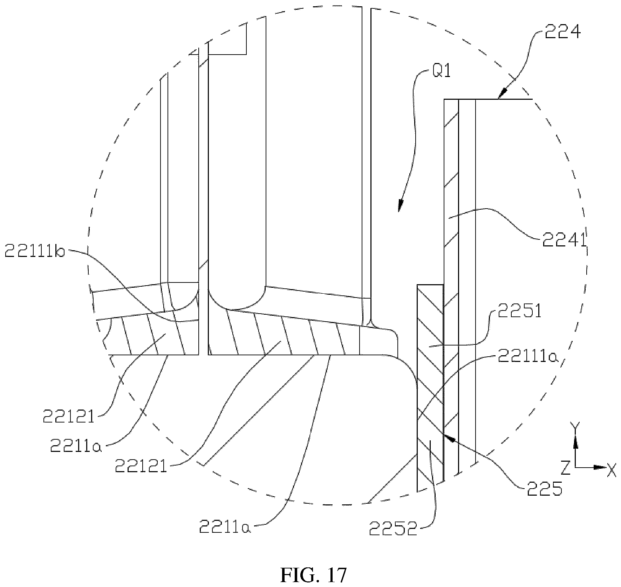

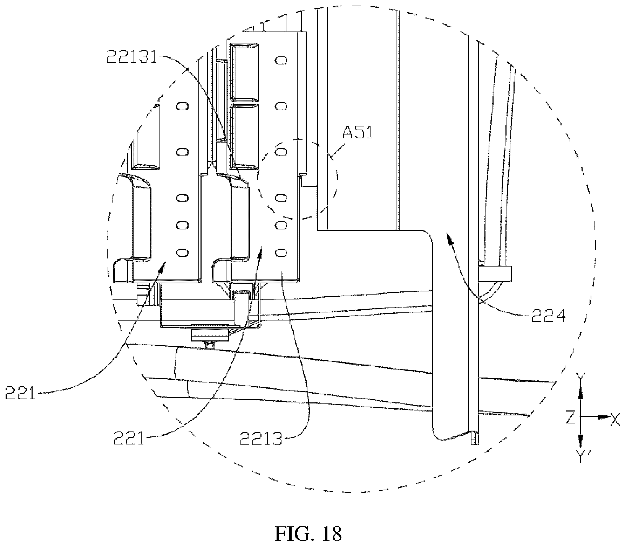

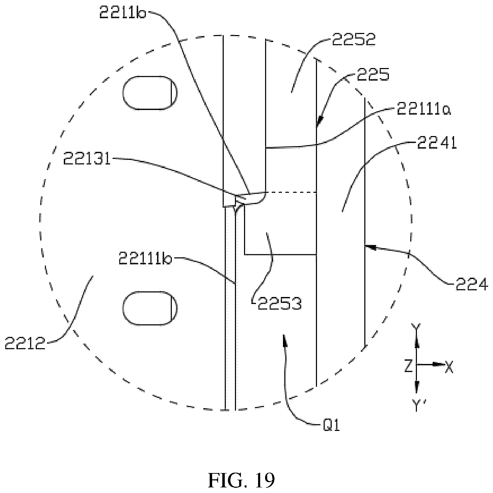

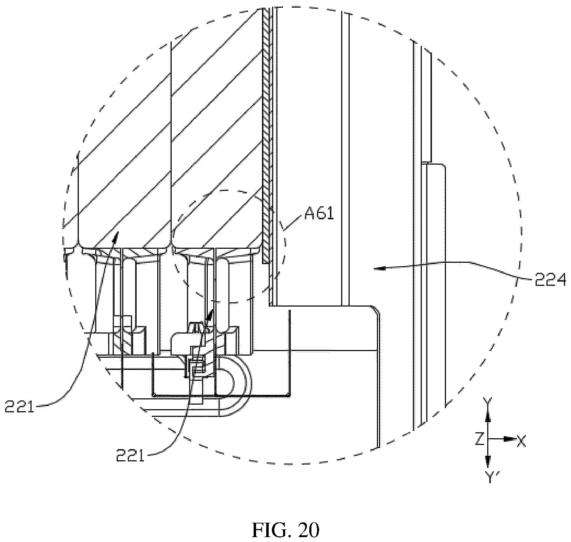

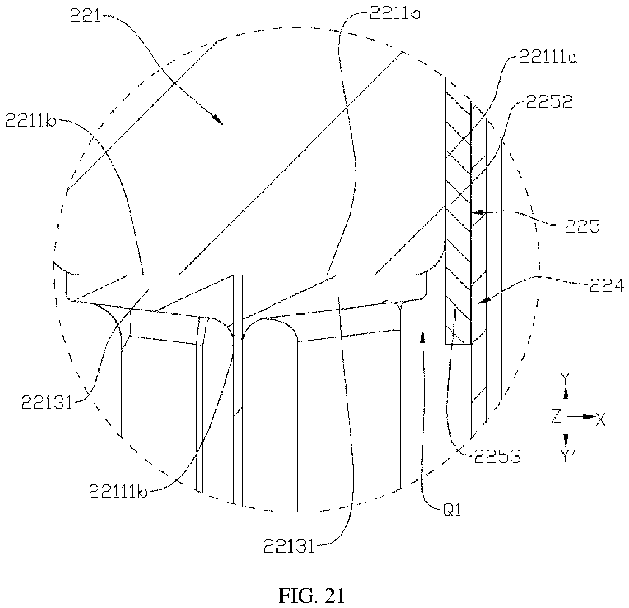

In some embodiments, as shown in FIG. 14 to FIG. 23, the battery module 20 includes an elastic member 224. The elastic members 224 and the cell assembly 22 are arranged along the first direction X. When the battery module 20 swells, the elastic member 224 can be compressed along the first direction X to provide space for swelling of the cell assembly 22.

A material of the elastic member 224 includes but is not limited to metal and plastic.

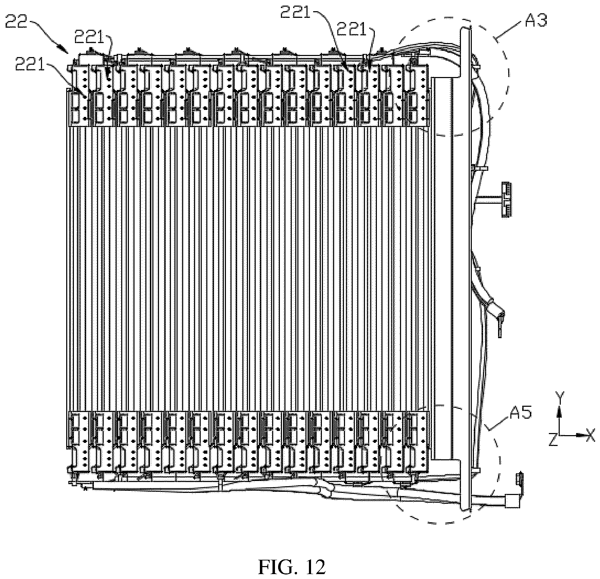

As shown in FIG. 12 to FIG. 21, in some embodiments, the battery module 20 includes a buffer 225. Along the first direction X, the buffer 225 is provided between the elastic member 224 and the cell assembly 22.

When the cell assembly 22 swells, the buffer 225 can provide space for swelling of the cell assembly 22. Through the cooperation between the elastic member 224 and the buffer 225, a large space can be provided for swelling of the cell assembly 22, and the elastic member 224, the buffer 225, and the cell assembly 22 can abut against each other all the time. This helps achieve a compact structure for the battery module 20 and reduce the risk that the battery module 20 moves in the housing 21.

The buffer 225 includes but is not limited to foam, rubber pad, and silicone.

As shown in FIG. 14 to FIG. 19, in some embodiments, the buffer 225 includes a first section 2251. along the second direction Y, the first section 2251 extends beyond the first end surface 2211a close to the buffer 225. The second direction Y is perpendicular to the first direction X.

In some embodiments, along the second direction Y, the first section 2251 may extend beyond the first end surface 2211a only, but does not extend beyond the first coverage portion 22121. The entire first section 2251 is located between the first coverage portion 22121 and the elastic member 224.

In some embodiments, along the second direction Y, the first section 2251 extends beyond the first coverage portion 22121 close to the buffer 225. It can be understood that along the second direction Y, the first section 2251 extends beyond not only the first end surface 2211a but also a surface of the first coverage portion 22121, the surface of the first coverage portion 22121 being a surface oriented away from the first end surface 2211a. In this case, a part of the first section 2251 is located between the first coverage portion 22121 and the elastic member 224, and another part of the first section 2251 extends beyond the space between the first coverage portion 22121 and the elastic member 224. As a result, the first section 2251 can adapt to greater deformation of the first bracket 2212, and the first coverage portion 22121 can still abut against the first section 2251 when the first bracket 2212 suffers great deformation.

Therefore, the buffer 225 includes the first section 2251 extending beyond the first end surface 2211a, and at least a part of the first section 2251 is located between the elastic member 224 and the first coverage portion 22121 of the first bracket 2212 closest to the elastic member 224.

When the cell 2211 swells, the first coverage portion 22121 moves a small distance towards the elastic member 224, and then the first section 2251 of the buffer 225 abuts against the elastic member 224, restraining the first coverage portion 22121 from moving closer to the elastic member 224. This helps restrict the swelling of the first sealing portion 22111b along the first direction X, and reduces the failure risk of the first sealing portion 22111b, thereby improving the reliability of the battery module 20.

In some embodiments, the buffer 225 includes a second section 2252, the first section 2251 extends from the second section 2252, and along the first direction X, a projection of the second section 2252 and a projection of the main body 22111a overlap.

It can be understood that the second section 2252 is located between the main body 22111a of the cell 2211 and the elastic member 224, the cell 2211 being a cell 2211closest to the elastic member 224 of the cell assembly 22 When the cell 2211 swells, the main body 22111a and the elastic member 224 jointly squeeze the second section 2252 to make it deform, so as to provide space for swelling of the cell 2211.

In an embodiment where the two electrode terminals 22113 are located at the opposite ends of the cell 2211 and the second bracket 2213 further includes a second coverage portion 22131, as shown in FIG. 12, FIG. 15 and FIG. 18 to FIG. 21, along the direction Y' opposite to the second direction Y, the buffer 225 further includes a third section 2253, and the third section 2253 extends from the second section 2252 along the direction Y' opposite to the second direction Y. The third section 2253 extends beyond the second end surface 2211b.

In some embodiments, the buffer 225 includes the third section 2253 extending beyond the second end surface 2211b, and at least a part of the third section 2253 is located between the elastic member 224 and the second coverage portion 22131 of the first bracket 2212 closest to the elastic member 224.

When the cell 2211 swells, the second coverage portion 22131 moves a small distance towards the elastic member 224, and then the third section 2253 of the buffer 225 abuts against the elastic member 224, restraining the second coverage portion 22131 from moving closer to the elastic member 224. This helps restrict the swelling of the first sealing portion 22111b along the first direction X, and reduces the failure risk of the first sealing portion 22111b, thereby improving the reliability of the battery module 20.

Along the direction Y' opposite to the second direction Y, the third section 2253 may extend beyond the second end surface 2211b only, but does not extend beyond the second coverage portion 22131. The entire third section 2253 is located between the second coverage portion 22131 and the elastic member 224.

In some other embodiments, the third section 2253 extends beyond the second coverage portion 22131 along the direction Y' opposite to the second direction Y. It can be understood that along the direction Y' opposite to the second direction Y, the third section 2253 extends beyond not only the second end surface 2211b but also a surface of the second coverage portion 22131, the surface of the second coverage portion 22131 being a surface oriented away from the second end surface 2211b. In this case, a part of the third section 2253 is located between the second coverage portion 22131 and the elastic member 224, and another part of the third section 2253 extends beyond the space between the second coverage portion 22131 and the elastic member 224 along the direction Y' opposite to the second direction Y. As a result, the third section 2253 can adapt to greater deformation of the second bracket 2213, and the second coverage portion 22131 can still abut against the third section 2253 when the second bracket 2213 suffers great deformation.

As shown in FIG. 2, FIG. 3, FIG. 22, and FIG. 23, in some embodiments, the housing 21 is provided with a restraint member 23, and along the first direction X, the elastic member 224 is located between the buffer 225 and the restraint member 23. The restraint member 23 is provided on a side of the elastic member 224, the side of the elastic member 224 being a side oriented away from the buffer 225. This can reduce the risk that the cell assembly 22, the buffer 225, and the elastic member 224 are detached from each other, and reduce the risk that the elastic member 224, the cell assembly 22, and the buffer 225 are detached from the housing 21. In this case, the housing 21, the cell assembly 22, the elastic member 224, and the buffer 225 can be integrally formed into a compact structure.

In the first direction X, one end of the elastic member 224 is fixed to the buffer 225, and another end of the elastic member 224 is connected to the restraint member 23, so as to improve the stability of the elastic member 224 between the buffer 225 and the restraint member 23.

In some embodiments, one end of the elastic member 224 abuts against the buffer 225 along the first direction X. The elastic member 224 and the buffer 225 may directly abut against each other. That is, the elastic member 224 and buffer 225 are in direct contact. The elastic member 224 and the buffer 225 may also abut against each other indirectly.

Another end of the elastic member 224 abuts against the restraint member 23 along the first direction X. The elastic member 224 and the and the restraint member 23 may directly abut against each other. That is, the elastic member 224 and the and the restraint member 23 are in direct contact. The elastic member 224 and the restraint member 23 may also abut against each other indirectly, for example, a buffer structure is provided between the elastic member 224 and the restraint member 23, so that the elastic member 224 and the restraint member 23 indirectly abut against each other through the buffer 225. The buffer structure may be foam.

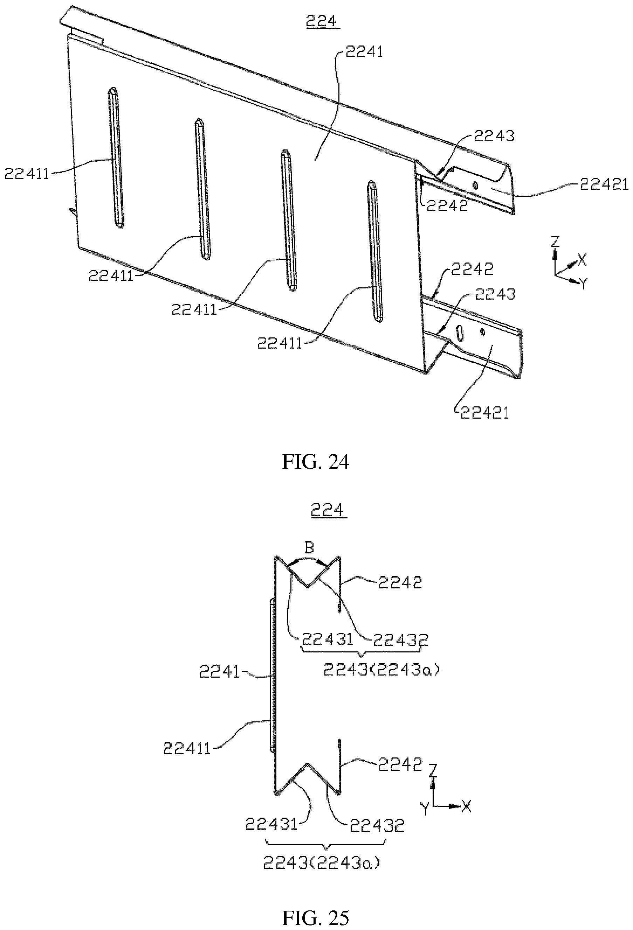

As shown in FIG. 24 to FIG. 27, in some embodiments, the elastic member 224 includes a base portion 2241, a connecting portion 2242, and at least one buffer portion 2243. The base portion 2241 and the connecting portion 2242 are spaced apart along the first direction X, and the buffer portion 2243 connects the base portion 2241 and the connecting portion 2242.

In some embodiments, the base portion 2241 extends beyond the first section 2251 along the second direction Y, so that the base portion 2241 can apply pressure on the cell assembly 22.

In some embodiments, the base portion 2241 is connected to the buffer 225. Optionally, the base portion 2241 is in contact-type connection with the buffer 225, so that the base portion 2241 abuts against the buffer 225. Optionally, the base portion 2241 and the buffer 225 may be connected through another component.

In some embodiments, the connecting portion 2242 is fixed to the housing 21. Optionally, the connecting portion 2242 is fixed to the restraint member 23.

In some embodiments, fixing includes but is not limited to abutting, bonding, welding, locking through fasteners, and buckling connection.

In some embodiments, the cell assembly 22, the elastic member 224, and the buffer 225 are all accommodated in the housing 21, facilitating the repair of the battery pack 100.

The connecting portion 2242 abuts against the restraint member 23. When the cell 2211 swells, the distance between the base portion 2241 and the connecting portion 2242 along the first direction X changes. The buffer portion 2243 can adapt to the change of the distance between the base portion 2241 and the connecting portion 2242, thereby adapting to swelling of the cell 2211. Optionally, the connecting portion 2242 is in contact-type connection with the restraint member 23. Optionally, the connecting portion 2242 and the restraint member 23 may be connected through another component.

In some embodiments, the base portion 2241 extends beyond the first section 2251 along the second direction Y, so that the base portion 2241 can apply a counteracting force to the first section 2251 on a side of the first section 2251, the side of the first section 2251 being a side oriented away from the cell assembly 22, limiting the position of the buffer 225.

In some embodiments, the base portion 2241 extends beyond the third section 2253 along the direction Y' opposite to the second direction Y, so that the base portion 2241 can apply a counteracting force to the third section 2253 on a side of the third section 2253, the side of the third section 2253 being a side oriented away from the cell assembly 22, limiting the position of the buffer 225.

In some embodiments, a part of the first sealing portion 22111b is spaced apart from the first coverage portion 22121, and a clearance is provided between the first sealing portion 22111b and the base portion 2241. The clearance may be an air clearance Q1, which facilitates heat dissipation and provides space for swelling of the cell 2211.

In some embodiments, a part of the first sealing portion 22111b is spaced apart from the second coverage portion 22131, and a clearance is provided between the first sealing portion 22111b and the base portion 2241. The clearance may be an air clearance Q1, which facilitates heat dissipation and provides space for swelling of the cell 2211.

The buffer portion 2243 is configured to provide space for swelling of the cell 2211. When the cell 2211 swells, the base portion 2241 squeezes the buffer portion 2243 to reduce the distance between the base portion 2241 and the connecting portion 2242, so as to provide space for swelling of the cell 2211.

The buffer portion 2243 may be in various structures. For example, the buffer portion 2243 is a semicircular arc structure, an S-shaped structure, a Z-shaped structure, or the like. As shown in FIG. 24 to FIG. 27, in some embodiments, the buffer portion 2243 is a bending structure provided between the base portion 2241 and the connecting portion 2242. Such structure is simple and easy to manufacture, and can properly adapt to the change of the distance between the base portion 2241 and the connecting portion 2242.

As shown in FIG. 25, in some embodiments, the buffer portion 2243 includes at least one first bending unit 2243a arranged between the base portion 2241 and the connecting portion 2242, and the first bending unit 2243a includes a first bending portion 22431 and a second bending portion 22432 that are connected, where the first bending portion 22431 and the second bending portion 22432 are arranged at an included angle.

The first bending portion 22431and the second bending portion 22432 of the buffer portion 2243 are connected and arranged at an included angle, so that the buffer portion 2243 can deform to absorb the acting force produced by a swelling cell 2211.

The included angle between the first bending portion 22431 and the second bending portion 22432 is B, where 0° < B < 90°. That is, the first bending portion 22431 and the second bending portion 22432 may be arranged at an acute angle.

The buffer portion 2243 may include one or more first bending units 2243a. In an embodiment where the buffer portion 2243 includes a plurality of first bending units 2243a, the plurality of first bending units 2243a are sequentially connected along the first direction X. This helps increase the adjustment range of the distance between the base portion 2241 and the connecting portion 2242, so as to better adapt to swelling of the cell 2211.

The plurality of first bending units 2243a are connected to the base portion 2241 and the connecting portion 2242 respectively.

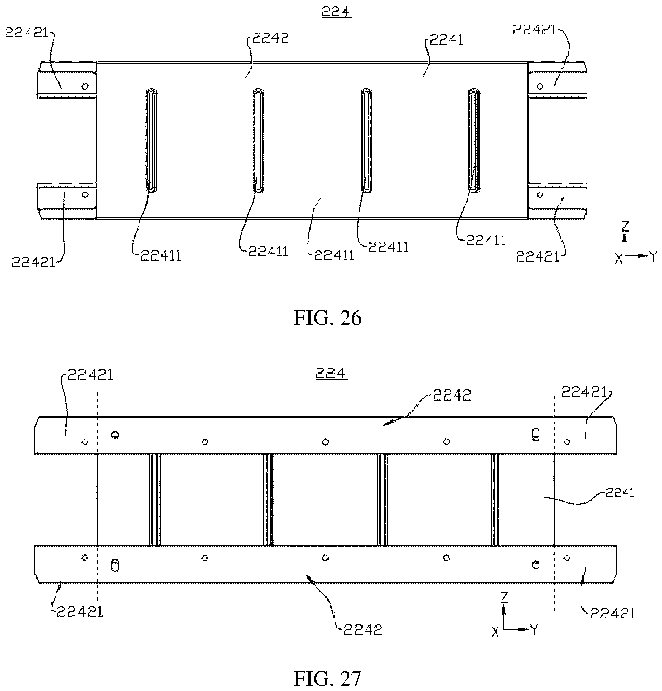

As shown in FIG. 27, the buffer portion 2243 includes one first bending unit 2243a. An end of the first bending portion 22431 of the first bending unit 2243a is connected to the base portion 2241, the end of the first bending portion 22431 being an end oriented away from the second bending portion 22432, and an end of the second bending portion 22432 is connected to the connecting portion 2242, the end of the second bending portion 22432 being an end oriented away from the first bending portion 22431. The first bending portion 22431 and the base portion 2241 are arranged at an acute angle, and the second bending portion 22432 and the connecting portion 2242 are arranged at an acute angle. The buffer portion 2243 having one first bending unit 2243a, the base portion 2241, and the connecting portion 2242 form an M-shaped elastic member 224.

When the cell 2211 swells, the distance between the base portion 2241 and the connecting portion 2242 along the first direction X decreases, the angle between the first bending portion 22431 and the second bending portion 22432 decreases, the angle between the base portion 2241 and first bending portion 22431 decreases, and the angle between the connecting portion 2242 and the second bending portion 22432 decreases.

The elastic member 224 may include one or more buffer portions 2243. In an embodiment where the elastic member 224 includes a plurality of buffer portions 2243, as shown in FIG. 24 to FIG. 27, the plurality of buffer portions 2243 are spaced apart along the second direction Y. Each buffer portion 2243 connects the base portion 2241 and the connecting portion 2242. The plurality of buffer portions 2243 are connected between the base portion 2241 and the connecting portion 2242, which can adapt to the change of the distance between the base portion 2241 and the connecting portion 2242.

As shown in FIG. 24 to FIG. 27, in an embodiment where the elastic member 224 includes a plurality of buffer portions 2243, the elastic member 224 further includes a plurality of connecting portions 2242, where each buffer portion 2243 corresponds to one connecting portion 2242, and each connecting portion 2242 is connected to the base portion 2241 through one buffer portion 2243. The buffer portion 2243 and the connecting portion 2242 may be provided in plurality, so as to absorb the acting force produced by a swelling cell 2211.

For example, as shown in FIG. 24 to FIG. 27, the elastic member 224 includes two buffer portions 2243 and two connecting portions 2242, where the two buffer portions 2243 are spaced apart along the third direction Z, the two connecting portions 2242 are spaced apart along the third direction Z, and the two buffer portions 2243 are respectively connected to two ends of the base portion 2241 along the second direction Y. Specifically, the two buffer portions 2243 are respectively connected to two edges of the base portion 2241 along the second direction Y. The first direction X, the second direction Y, and the third direction Z are perpendicular to each other.

Two buffer portions 2243 and two connecting portions 2242 are provided, and the two buffer portions 2243 are spaced apart along the first direction X, so as to utilize the assembly space properly.

As shown in FIG. 24 to FIG. 27, in some embodiments, the base portion 2241 is provided with a stiffener 22411, so that the base portion 2241 has high strength and is not easy to be damaged.

The stiffener 22411 may be in a strip structure extending along the third direction Z. There may be one or more stiffeners 22411. In an embodiment where a plurality of stiffeners 22411 are provided, the plurality of stiffeners 22411 are spaced apart along the second direction Y. A shown in FIG. 24, FIG. 26, and FIG. 27, four stiffeners 22411 are provided.

The elastic member 224 may be formed in different manners. For example, the base portion 2241, the connecting portion 2242, and the buffer portion 2243 are independent of each other, and they are connected into a whole by means of detachable connection or permanent connection to form the elastic member 224. In some other embodiments, the elastic member 224 may also be integrally formed. For example, the base portion 2241, the buffer portion 2243, and the connecting portion 2242 are formed by bending one piece of plate. The structure is simple and easy to manufacture. In addition, the base portion 2241 and the buffer portion 2243 are firmly connected, and the buffer portion 2243 and the connecting portion 2242 are firmly connected.

In some embodiments, the restraint member 23 may be the box cover 10. To be specific, along the first direction X, the base portion 2241 and the connecting portion 2242 of the elastic member 224 abut against the buffer 225 and the box cover 10 respectively. In this case, the box cover 10 can not only restrict the movement of the elastic member 224 along the first direction X, but also cover the opening 212. As a result, a separate restraint member 23 does not need to be provided in the battery module 20, which simplifies the structure of the battery module 20.

In some other embodiments, the restraint member 23 and the box cover 10 may be two independent components. The restraint member 23 is provided at the end of the housing 21 having an opening 212. In this way, the cell assembly 22, the buffer 225, and the elastic member 224 can be confined in the housing 21, and then the housing 21, the cell assembly 22, the buffer 225, and the elastic member 224 can be integrally formed. The box cover 10 can be removed without affecting the relative positional relationship among the cell assembly 22, the buffer 225, and the elastic member 224, so that the box cover 10 can be removed and mounted separately.

As shown in FIG. 2, FIG. 3, FIG. 22, and FIG. 23, in some embodiments, the restraint member 23 includes a first restraint member 231 and a second restraint member 232, and the first restraint member 231 and the second restraint member 232 are spaced apart in the second direction Y.

In some embodiments, the first restraint member 231 is connected to the first wall 213, the second restraint member 232 is connected to the second wall 214, and the connecting portion 2242 is fixed to the first restraint member 231 and the second restraint member 232.

The first restraint member 231 and the second restraint member 232 are respectively connected to the first wall 213 and the second wall 214 arranged opposite to each other along the second direction Y. This reduces the risk that the first restraint member 231 and the second restraint member 232 interfere with other structures. The first restraint member 231 and the second restraint member 232 jointly limit the position of the elastic member 224, so that the elastic member 224 can more reliably abut between the restraint member and 23 the buffer 225.

The first restraint member 231 is connected to an end of the first wall 213 located at the opening 212 of the housing 21. The first restraint member 231 protrudes from the inner surface of the first wall 213 in a direction from the first wall 213 to the second wall 214.

The first restraint member 231 and the first wall 213 may be separately arranged and then connected into a whole. The first restraint member 231 and the first wall 213 may be permanently connected, for example, connected through welding or bonding, so as to improve the stability of connection between the first restraint member 231 and the first wall 213.

The first restraint member 231 and the first wall 213 may be detachably connected, for example, connected using bolts, which facilitates the repair and replacement of the first restraint member 231. If either of the first wall 213 and the first restraint member 231 is damaged, only the damaged one needs to be replaced, thereby reducing costs.

In some embodiments, the first restraint member 231 and the first wall 213 may also be integrally formed. The first restraint member 231 may be a flange structure provided at an end portion of the first wall 213, so that the first restraint member 231 can be formed easily.

As shown in FIG. 2, FIG. 3, FIG. 22, and FIG. 23, the second restraint member 232 is connected to an end of the second wall 214 located at the opening 212 of the housing 21. The second restraint member 232 protrudes from the inner surface of the second wall 214 in a direction from the second wall 214 to the first wall 213.

The second restraint member 232 and the second wall 214 may be separately arranged and then connected into a whole. The second restraint member 232 and the second wall 214 may be permanently connected, for example, connected through welding or bonding, so as to improve the stability of connection between the second restraint member 232 and the second wall 214.

The second restraint member 232 and the second wall 214 may be detachably connected, for example, connected using bolts, which facilitates the repair and replacement of the second restraint member 232. If either of the second wall 214 and the second restraint member 232 is damaged, only the damaged one needs to be replaced, thereby reducing costs.

In some embodiments, the second restraint member 232 and the second wall 214 may also be integrally formed. The second restraint member 232 may be a flange structure provided at an end portion of the second wall 214, so that the second restraint member 232 can be formed easily.

In some embodiments, along the second direction Y, the elastic member 224 includes two extensions 22421 of the connecting portion extending beyond two ends of the base portion 2241, and the two extensions 22421 are respectively connected to two ends of the base portion 2241 in the second direction Y.

The two extensions 22421 are fixed to the first restraint member 231 and the second restraint member 232 respectively.

Each connecting portion 2242 is connected to two extensions 22421, where one of the two extensions 22421 extends beyond one end of the base portion 2241 along the second direction Y, and the other one of the two extensions 22421 extends beyond another end of the base portion 2241 along the direction Y' opposite to the second direction Y.

When the cell 2211 swells, an overlap between the base portion 2241 and the connecting portion 2242 protrudes along a direction oriented away from the cell assembly 22, two extensions 22421 of the base portion 2241 abut against the first restraint member 231 and the second restraint member 232 respectively to function like a cantilever structure. This can not only prevent the elastic member 224 from being detached from the first restraint member 231 and the second restraint member 232, but also adapt to swelling of the cell 2211.

The extensions 22421 are fixed to the first restraint member 231 and the second restraint member 232 respectively. In this way, when the cell 2211 swells, the connecting portion 2242 deforms along a direction oriented away from the cell assembly 22, so as to adapt to swelling of the cell 2211 and provide space for the deformed cell 2211.

In some embodiments, the restraint member 23 includes a third restraint member 233 and a fourth restraint member 234, and the third restraint member 233 and the fourth restraint member 234 are spaced apart along the third direction Z.

In some embodiments, the third restraint member 233 is connected to the third wall 215, and the fourth restraint member 234 is connected to the fourth wall 216. The connecting portion 2242 is fixed to the third restraint member 233 and the fourth restraint member 234.

The third restraint member 233 is fixed to the third wall 215, and the fourth restraint member 234 is fixed to the fourth wall 216, reducing the risk that the third restraint member 233 and the fourth restraint member 234 interfere with other structures. The third restraint member 233 and the fourth restraint member 234 jointly confine the cell assembly 22, the buffer 225, and the elastic member 224 in the housing 21, reducing the risk that the cell assembly 22, the buffer 225, and the elastic member 224 are detached from the housing 21. In this way, the elastic member 224 can more stably abut between the restraint member 23 and the buffer 225.

In some embodiments, the third restraint member 233 is connected to an end of the third wall 215 located at the opening 212 of the housing 21. The third restraint member 233 protrudes from the inner surface of the third wall 215 along a direction from the third wall 215 to the fourth wall 216.

The third restraint member 233 and the third wall 215 may be separately arranged and then connected into a whole. The third restraint member 233 and the third wall 215 may be permanently connected, for example, connected through welding or bonding, so as to improve the stability of connection between the third restraint member 233 and the third wall 215.

The third restraint member 233 and the third wall 215 may be detachably connected, for example, connected using bolts, which facilitates the repair and replacement of the third restraint member 233. If either of the third wall 215 and the third restraint member 233 is damaged, only the damaged one needs to be replaced, thereby reducing costs. In some other embodiments, the third restraint member 233 and the third wall 215 may also be integrally formed. The third restraint member 233 may be a flange structure provided at an end portion of the third wall 215, so that the third restraint member 233 can be formed easily.

There may be one or more third restraint members 233. In an embodiment where a plurality of third restraint members 233 are provided, the plurality of third restraint members 233 are spaced apart along the second direction Y. As shown in FIG. 2, FIG. 3, FIG. 22, and FIG. 23, two third restraint members 233 are provided.

In some embodiments, the fourth restraint member 234 is connected to an end of the fourth wall 216 located at the opening 212 of the housing 21. The fourth restraint member 234 protrudes from the inner surface of the fourth wall 216 along a direction from the fourth wall 216 to the third wall 215.

The fourth restraint member 234 and the fourth wall 216 may be separately arranged and then connected into a whole. The fourth restraint member 234 and the fourth wall 216 may be permanently connected, for example, connected through welding or bonding, so as to improve the stability of connection between the fourth restraint member 234 and the fourth wall 216.

The fourth restraint member 234 and the fourth wall 216 may be detachably connected, for example, connected using bolts, which facilitates the repair and replacement of the fourth restraint member 234. If either of the fourth wall 216 and the fourth restraint member 234 is damaged, only the damaged one needs to be replaced, thereby reducing costs.

In some embodiments, the fourth restraint member 234 and the fourth wall 216 may also be integrally formed. The fourth restraint member 234 may be a flange structure provided at an end portion of the fourth wall 216, so that the fourth restraint member 234 can be formed easily.

There may be one or more fourth restraint members 234. In an embodiment where a plurality of fourth restraint members 234 are provided, the plurality of fourth restraint members 234 are spaced apart along the second direction Y. As shown in FIG. 2, FIG. 3, FIG. 22, and FIG. 23, two fourth restraint members 234 are provided.

In some embodiments, the battery module 20 further includes a first insulator 24 (as shown in FIG. 2). Along the third direction Z, the first insulator 24 is provided between the third wall 215 and the cell assembly 22. The first insulator 24 can insulate the third wall 215 from the cell assembly 22 and prevent the friction between the cell assembly 22 and the third wall 215, thereby increasing the service life of the housing 21. When viewed along the direction opposite to the third direction Z, a projection of the cell assembly 22 located within a projection of the first insulator 24. In this case, even when the cell assembly 22 swells and moves a certain distance in the housing 21, the first insulator 24 is still located between the third wall 215 and the cell assembly 22.

An embodiment of this application further provides an electric device, and the electric device includes the battery pack 100 according to any one of the foregoing embodiments.

The battery pack 100 according to any one of the foregoing embodiments has high reliability, which helps improve the reliability of the electric device powered by the battery module 20 and the battery pack 100.
The foregoing descriptions are merely preferred some embodiments of this application which are not intended to limit this application. Persons skilled in the art understand that this application may have various modifications and variations. Any modifications, equivalent replacements, and improvements made without departing from principle of this application shall fall within the protection scope of this application

## Claims

1. A battery module (20), comprising:
a cell assembly (22) comprising a plurality of cell units (221) stacked along a first direction (X), each cell unit (221) comprises a cell (2211) and a first bracket (2212);
the cell (2211) comprises a cell housing (22111), an electrode assembly (22112), and electrode terminals (22113); the cell housing (22111) comprises a main body (22111a) and a first sealing portion (22111b), and the electrode terminals (22113) extend out of the cell housing (22111) from the first sealing portion (22111b);
the main body (22111a) is provided with a first end surface (2211a), and the first sealing portion (22111b) is connected to the first end surface (2211a);
the first bracket (2212) comprises a first coverage portion (22121), and the first coverage portion (22121) covers at least a part of the first end surface (2211a);
an elastic member (224) is arranged with the cell assembly (22) along the first direction (X);
wherein along the first direction (X), a buffer (225) is provided between the elastic member (224) and the cell assembly (22); wherein
the buffer (225) comprises a first section (2251); and along a second direction (Y), the first section (2251) extends beyond the first end surface (2211a), the first direction (X) is perpendicular to the second direction (Y).

2. The battery module (20) according to claim 1, wherein along the second direction (Y), the first section (2251) extends beyond the first coverage portion (22121).

3. The battery module (20) according to claim 1 or 2, wherein the main body (22111a) extends beyond the first coverage portion (22121) in the first direction (X).

4. The battery module (20) according to claim 3, wherein the first coverage portion (22121) covers at least a part of the first sealing portion (22111b).

5. The battery module (20) according to any one of claims 1 to 4, wherein main bodies of adjacent cells (2211) are in contact.

6. The battery module (20) according to any one of claims 1 to 5, wherein the elastic member (224) comprises a base portion (2241), a connecting portion (2242), and at least one buffer portion (2243); the base portion (2241) and the connecting portion (2242) are spaced apart along the first direction (X);
the base portion (2241) is connected to the buffer (225), and the base portion (2241) extends beyond the first section (2251) along the second direction (Y).

7. The battery module (20) according to claim 6, wherein the buffer portion (2243) comprises a first bending unit (2243a), and the first bending unit (2243a) comprises a first bending portion (22431) and a second bending portion (22432) connected to the first bending portion (22431), an included angle formed between the first bending portion (22431) and the second bending portion (22432) is B, wherein 0° < B < 90°.

8. The battery module (20) according to claim 6 or 7, wherein a part of the first sealing portion (22111b) is spaced apart from the first coverage portion (22121), and a clearance (Q1) is provided between the first sealing portion (22111b) and the base portion (2241).

9. The battery module (20) according to any one of claims 6 to 8, wherein the buffer portion (2243) is configured to provide space for swelling of the cell (2211).

10. The battery module (20) according to any one of claims 5 to 8, wherein the battery module (20) further comprises a housing (21), and the connecting portion (2242) is fixed to the housing (21);
the cell assembly (22), the elastic member (224), and the buffer (225) are all accommodated in the housing (21).

11. The battery module (20) according to any one of claims 1 to 9, wherein the buffer (225) comprises a second section (2252), the first section (2251) extends from the second section (2252); and along the first direction (X), a projection of the second section overlaps with a projection of the main body (22111a).

12. The battery module (20) according to any one of claims 1 to 11, wherein the first bracket (2212) is integrally formed on the cell (2211).

13. The battery module (20) according to any one of claims 1 to 12, wherein the battery module (20) comprises a housing (21); the cell assembly (22), the elastic member (224), and the buffer (225) are all accommodated in the housing (21); the housing (21) is provided with a restraint member (23); and along the first direction (X), the elastic member (224) is located between the buffer (225) and the restraint member (23);
the elastic member (224) comprises a base portion (2241), a connecting portion (2242), and at least one buffer portion (2243); the base portion (2241) and the connecting portion (2242) are spaced apart along the first direction (X), the base portion (2241) abut against the buffer (225), connecting portion (2242) abut against the restraint member (23), the buffer portion (2243) connects the base portion (2241) and the connecting portion (2242).

14. A battery pack (100), comprising:
the battery module (20) according to any one of claims 1 to 13; and
a box cover (10) connected to the battery module (20).

15. An electric device, comprising at least one battery pack, wherein each battery pack is the battery pack according to claim 14.
